# EUROPEAN PATENT APPLICATION

(11) **EP 3 156 172 A1**
(43) Date of publication of application: **19.04.2017**
(21) Application number: 15275216.8
(22) Date of filing: 12.10.2015
(51) Int. Cl.: B23P 15/00, B21D 28/06, B21D 28/24, B21D 28/26, B21D 53/92

(54) **METAL OBJECT PRODUCTION**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

A method and apparatus for forming a hole through a metal workpiece (200), the method comprising: punching, using a punch tool (800), the workpiece (200) to form an initial hole through the metal workpiece (200); coining, using a coining tool (900), the punched workpiece (200) to deform and cold-work a portion of the punched workpiece (200) at or proximate to an opening of the initial hole, thereby forming a coined hole through the metal workpiece (200); and, thereafter, shaving, using a shaving tool (952), the metal workpiece (200) to remove material from a side wall of the coined hole, thereby producing the hole through the metal workpiece (200).

## Description

### FIELD OF THE INVENTION

The present invention relates to the production of metal objects.

### BACKGROUND

In the manufacture of metal objects, such as sheet metal fabrication for producing aircraft component parts, the metal objects may be cut to profile and subsequently solution heat treated, before going on to be formed to shape.

In an example process, EN 2395 aluminium alloy is solution treated by heat soaking the object at 505°C ± 5°C for 20 minutes. Solution heat treatment causes one or more of the alloy constituents to enter into solid solution. The alloy is then cooled rapidly in a water based quenching liquid to hold these alloy constituents in solution. This improves the workability of the of the alloy material, and allows for a limited working time period during which the object may be worked. For example, solution heat treatment may provide a working time period of approximately two hours for an EN 2395 aluminium alloy object, when that object is processed under ambient conditions.

The solution treatment process and subsequent quenching tends to cause deformation of previously flat objects. This tends to be especially true for larger component parts.

Typically, rolling is performed to restore objects that have been deformed by the solution treatment and subsequent quenching process to a flat state. Rolling is a metal forming process in which a metal object is passed through a series of opposing rollers.

Rolling an object tends to slightly deform that object, for example, by reducing the object's thickness, and elongating the object. This may lead to inaccuracies of the produced objects.

### SUMMARY OF THE INVENTION

In a first aspect, the present invention provides a method of forming a hole through a metal workpiece. The method comprises: punching, using a punch tool, the workpiece to form an initial hole through the metal workpiece; coining, using a coining tool, the punched workpiece to deform and cold- work a portion of the punched workpiece at or proximate to an opening of the initial hole, thereby forming a coined hole through the metal workpiece; and, thereafter, shaving, using a shaving tool, the metal workpiece to remove material from a side wall of the coined hole, thereby producing the hole through the metal workpiece.

The coining tool may have a pointed end such that the step of coining comprises forming, at an opening of the initial hole, a chamfer between a side wall of the initial hole and an external surface of the workpiece.

The step of coining may comprise: deforming a portion of the punched workpiece at or proximate to a first opening of the initial hole; and deforming a portion of the punched workpiece at or proximate to a second opening of the initial hole, the second opening being opposite to the first opening.

A respective chamfer between the side wall of the initial hole and an external surface of the workpiece may be formed at each opening of the initial hole.

A diameter of the punch tool may be less than or equal to a predetermined diameter. A diameter of the shaving tool may be equal to a predetermined diameter such that the hole through the workpiece has the predetermined diameter.

The punching, coining, and shaving operations may be performed by a computer numerical controlled punch press.

The method may further comprise, prior to the step of punching, performing a heat treatment process on the metal workpiece, and performing a rolling process on the heat treated metal workpiece. The step of punching may be performed on the rolled metal workpiece.

The method may further comprise, after the step of shaving, performing a metal hardening process on the metal workpiece.

The heat treatment process may be a solution treatment process.

The method may further comprise, after the rolling process and prior to the step of punching, cooling the metal workpiece to below a threshold temperature.

The steps of punching, coining, and shaving may be performed in an environment having a temperature above the threshold temperature. The steps of punching, coining, and shaving may be completed within a predetermined time period from a time at which the worksheet is introduced to the environment.

The metal worksheet may be made of an aluminium-copper alloy.

The metal workpiece may be made of an aluminium-lithium alloy. The method may further comprise, prior to the step of punching, performing a rolling process on the metal workpiece and, thereafter, performing a metal hardening process on the initial metal object so as to produce the metal object.

The method may further comprise, after the step of shaving, performing a metal folding process to fold at least a portion of the metal workpiece.

In a further aspect, the present invention provides apparatus for forming a hole through a metal workpiece. The apparatus comprises one or more robots configured to: punch, using a punch tool, the workpiece to form an initial hole through the metal workpiece; coin, using a coining tool, the workpiece to deform a portion of the punched workpiece at or proximate to an opening of the initial hole, thereby forming a coined hole through the metal workpiece; and, thereafter, shave, using a shaving tool, the metal workpiece to remove material from a side wall of the coined hole, thereby producing the hole through the metal workpiece.

In a further aspect, the present invention provides a metal object comprising a through hole, the through hole comprising a coined portion at or proximate to an opening of the through hole, and a shaved side wall, wherein the metal object has been produced using a method according to any of the above aspects.

### BRIEF DESCRIPTION OF THE DRAWINGS

Figure 1 is a schematic illustration (not to scale) showing a system for producing a component part of an aircraft;
Figure 2 is a schematic illustration (not to scale) showing an example sheet metal workpiece;
Figure 3 is a schematic illustration (not to scale) showing an example component part of an aircraft;
Figure 4 is a process flow chart showing certain steps of a process of producing the component part;
Figure 5 is a process flow chart showing certain steps of a process of preparing the sheet metal workpiece;
Figure 6 is a process flow chart showing certain steps of a process of producing an initial component from the prepared sheet metal workpiece;
Figure 7 is a process flow chart showing certain steps of a punching process;
Figure 8 is a schematic illustration (not to scale) showing a punching operation;
Figure 9 is a schematic illustration (not to scale) showing a coining operation;
Figure 10 is a schematic illustration (not to scale) showing a shaving operation; and
Figure 11 is a process flow chart showing certain steps of a process of hardening the initial component.

### DETAILED DESCRIPTION

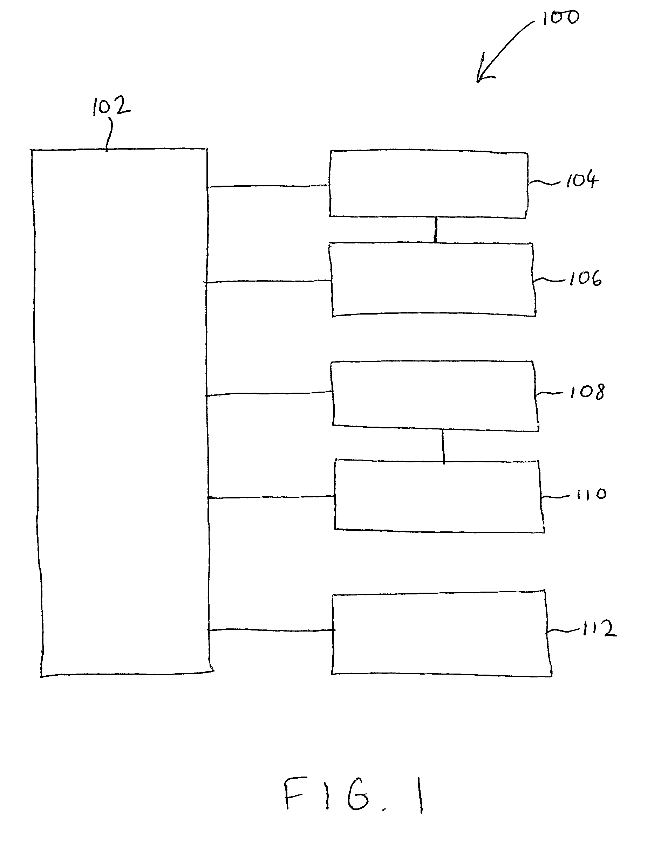

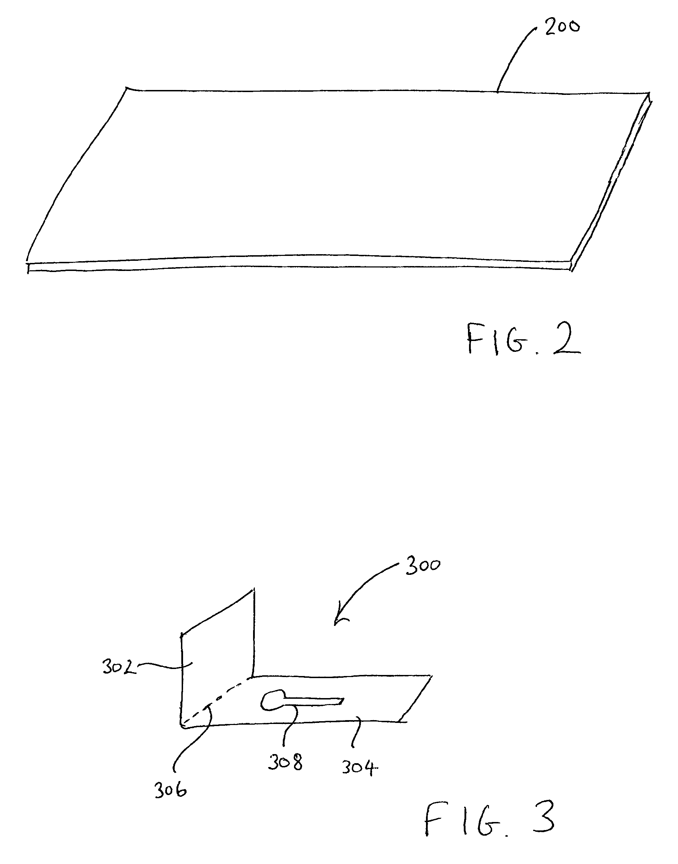

Figure 1 is a schematic illustration (not to scale) showing a system 100 for producing a component part of an aircraft. The component part of the aircraft that is to be produced is described in more detail later below with reference to Figure 3.

In this embodiment, the system 100 comprises a storage module 102, a solution treatment module 104, a sheet metal rolling module 106, a sheet metal punching module 108, a sheet metal folding module 110, and a metal hardening module 112.

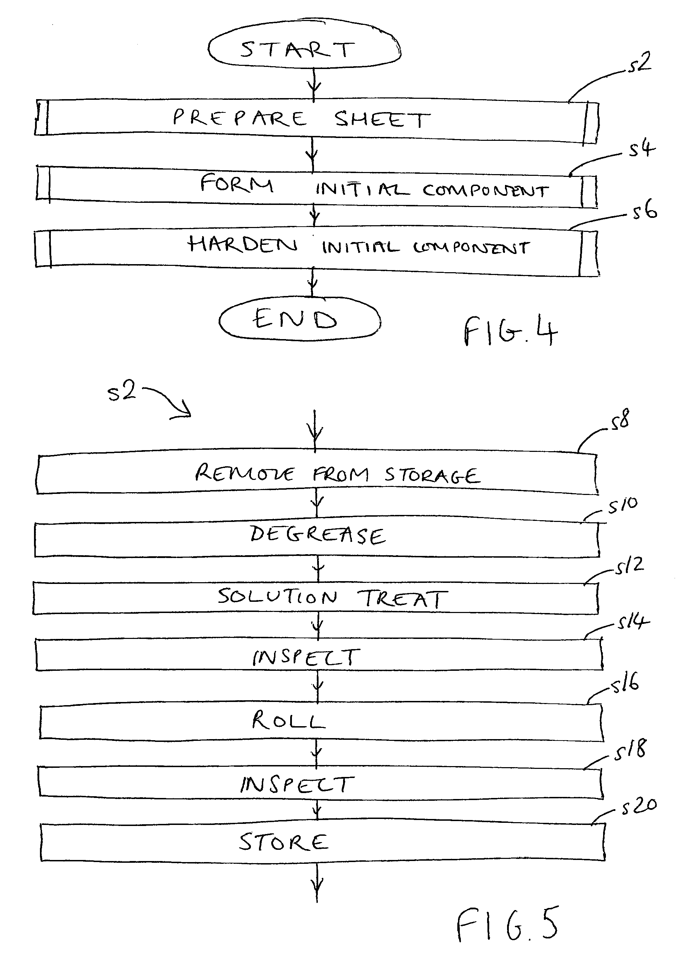

The storage module 102 is configured to store items including, but not limited to, sheet metal from which the aircraft component is to be produced, and aircraft components at various stages of production. The storage module 102 may store items at a range of different temperatures. Examples of storage modules include, but are not limited to, the TruStore (Trademark) storage system. Further information on temperatures at which the storage module 102 may store items is provided in more detail later below with reference to Figure 4 to 7. In this embodiment, the storage module 102 is coupled to the solution treatment module 104, the sheet metal rolling module 106, the sheet metal punching module 108, the sheet metal folding module 110, and the precipitation hardening module 112 such that items may be sent between the storage module 102 and each of those other modules 104-112.

The solution treatment module 104 comprises a solution treatment machine or machines configured to perform a solution treatment process on items received by the solution treatment module 104 from the storage module 102. The solution treatment process is described in more detail later below with reference to Figures 4 and 5. The solution treatment module 104 is coupled to the sheet metal rolling module 106 such that solution treated items may be sent from the solution treatment module 104 to the sheet metal rolling module 106.

The sheet metal rolling module 106 comprises a sheet metal rolling machine or machines configured to perform a metal rolling process on sheet metal received by the sheet metal rolling module 106 from the solution treatment module 104. Hot rolling or cold rolling may be performed. In this embodiment, the metal rolling process comprises passing metal stock through one or more pairs of opposing rollers, thereby flattening the metal. The metal may be lengthened by the rolling process. Preferably, rolling machine or machines are configured to output sheet metal having substantially the same thickness as the pre-solution treatment sheet metal. In some embodiments, the rollers may be controlled such that the thickness of the rolled metal stock may be varied.

The sheet metal punching module 108 comprises a computer numerical control (CNC) metal punching machine or machines configured to perform a metal punching process on items received by the sheet metal punching module 108 from the storage module 102. In this embodiment, the metal punching process comprises using a punch press to force a punch tool through a sheet metal workpiece to create a hole via shearing. The punch is forced through the sheet metal workpiece into a die. In some embodiments, one or more specially shaped punches may be used to create certain features or perform certain operations, for example, part marking, holing, forming shaped holes and patterns, embossing, coining, forming stiffening features, forming flanges, forming alignment features, forming sheared features, forming holes, forming lightening holes, and deburring of edges. The sheet metal punching module 108 is coupled to the sheet metal folding module 110 such that punched items may be sent from the sheet metal punching module 108 to the sheet metal folding module 110.

The sheet metal folding module 110 comprises a computer numerical control (CNC) metal folding machine or machines configured to perform a metal folding process on items received by the sheet metal folding module 110 from the sheet metal punching module 108. Examples of metal folding machines include, but are not limited to, metal folding robots such as TruBend (Trademark) press brakes. Air Bending, Bottoming and Coining press brakes may be used. In this embodiment, the metal folding process comprises positioning a sheet metal workpiece over a die block and then pressing the sheet metal workpiece around the die block thereby to fold the workpiece.

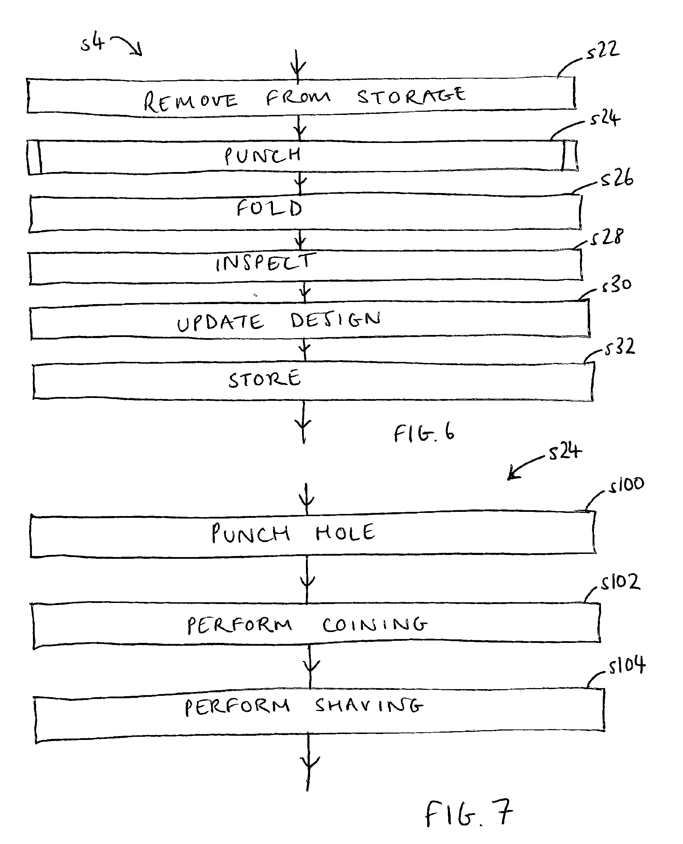

The metal hardening module 112 is configured to perform a precipitation hardening process on items received by the metal hardening module 112 from the storage module 102. The precipitation hardening process is described in more detail later below with reference to Figures 4 and 7.

Figure 2 is a schematic illustration (not to scale) showing an example sheet metal workpiece 200 that is to be processed by the system 100 so as to form a plurality of component parts of an aircraft. In this embodiment, the sheet metal workpiece 200 is made of an aluminium-copper alloy such as EN 2395. Preferably, the sheet metal workpiece 200 has substantially uniform thickness.

Figure 3 is a schematic illustration (not to scale) showing a component part of an aircraft, hereinafter referred to as a "component" and indicated by the reference numeral 300, to be formed from the sheet metal workpiece 200 by the system 100.

In this embodiment, the component 300 comprises a first portion 302 defining a first end of the component 300, and a second portion 304 defining a second end of the component 300. The first portion 302 and the second portion 304 are different areas of a single elongate strip of metal.

The component 300 further comprises a fold 306 between the first portion 302 and the second portion 304 such that the first portion 302 is oblique (e.g. perpendicular) to the second portion 304.

The component 300 further comprises a keyhole 308 formed through the second portion 304. The keyhole 308 is for receiving a key-shaped member formed in a different aircraft component to facilitate the attachment together of the component 300 and the different aircraft component.

In this embodiment, multiple components 300 are produced from the single sheet metal workpiece 200.

Apparatus, including computers for controlling one or more of the modules 102-112 of the system 100, for implementing the above arrangement, and performing one or more of the method steps to be described later below, may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.

Figure 4 is a process flow chart showing certain steps of a process of producing, by the system 100, from the sheet metal workpiece 200, the component 300.

At step s2, a preparation process is performed on the sheet metal workpiece 200. The preparation process performed at step s2 is described in more detail later below with reference to Figure 5.

At step s4, an "initial component" is produced from the prepared sheet metal workpiece 200. Production of the initial component from the sheet metal workpiece 200 is described in more detail later below with reference to Figure 6. In this embodiment, an "initial component" is in a more workable condition following a solution heat treatment process.

At step s6, a hardening process is performed on the initial component, thereby producing the component 300. The hardening process is described in more detail later below with reference to Figure 7.

Thus, a process of producing the component 300 is provided.

Returning now to the description of step s2 of the process of Figure 4, Figure 5 is a process flow chart showing certain steps of a process of preparing the sheet metal workpiece 200.

Initially, the sheet metal workpiece 200 is stored at the storage module 102, for example, at temperature between 10°C and 30°C (e.g. ambient temperature of the environment in which the storage module 102 operates).

At step s8, the storage module 102 sends the sheet metal workpiece 200 to the solution treatment module 104. Transportation of the sheet metal workpiece 200 to the solution treatment module 104 may be performed automatically or by a human operator.

At step s10, the solution treatment module 104 degreases the sheet metal workpiece 200. Degreasing of the sheet metal workpiece 200 may be performed automatically or by a human operator. The sheet metal workpiece 200 may be degreased according to any appropriate standard using any appropriate aerospace approved detergent.

At step s12, the solution treatment module 104 solution treats the sheet metal workpiece 200. In this embodiment, solution treating the sheet metal workpiece 200 comprises heating the sheet metal workpiece 200 to a predetermined temperature (e.g. 505°C ± 5°C), and holding the sheet metal workpiece 200 at that temperature for sufficient time to induce one or more of the constituents of the sheet metal workpiece 200 to enter into solid solution. The sheet metal workpiece 200 is then cooled rapidly to hold the constituents of the sheet metal workpiece 200 in solution. The sheet metal workpiece 200 may be solution treated according to any appropriate standard.

At step s14, a human operator inspects the solution treated sheet metal workpiece 200 to check that it conforms to a predetermined set of criteria. In some embodiments, the solution treated sheet metal workpiece 200 is inspected automatically. If the inspection is passed, the method proceeds to step s16. However, if the inspection failed, the process of Figure 4 may be restarted or the workpiece 200 may be scrapped.

Solution treating the sheet metal workpiece 200 tends to bend and distort the sheet metal workpiece 200 such that it is no longer a flat sheet of material. In other words, solution treatment tends to cause the previously flat (i.e. having a level surface without raised areas or indentations) workpiece 200 to warp, and become non-flat.

Solution treating the sheet metal workpiece 200 tends to make the workpiece 200 more workable by softening the workpiece 200. Thus, the solution treated sheet metal workpiece 200 is more workable relative to the sheet metal workpiece 200 prior to the solution treatment process.

At step s16, the solution treatment module 104 sends the solution treated sheet metal workpiece 200 to the sheet metal rolling module 106. The sheet metal rolling module 106 rolls the solution treated sheet metal workpiece 200 by passing the sheet metal workpiece 200 through one or more pairs of opposing rollers. Thus, the sheet metal workpiece 200 is flattened.

At step s18, a human operator inspects the rolled sheet metal workpiece 200 to check that it conforms to a predetermined set of criteria. In some embodiments, the rolled sheet metal workpiece 200 is inspected automatically. If the inspection is passed, the method proceeds to step s20. However, if the inspection failed, the process of Figure 4 may be restarted or the workpiece 200 may be scrapped.

At step s20, the sheet metal rolling module 106 sends the rolled sheet metal workpiece 200 to the storage module 102. The storage module 102 stores the more workable rolled sheet metal workpiece 200 at a predetermined temperature. Preferably, the rolled sheet metal workpiece 200 is stored at or below-40°C. Advantageously, it tends to be possible to store the rolled sheet metal workpiece 200 in this way for long periods of time. Storage at higher temperatures may be possible, however but this will tend to reduce the allowable storage time and/or working time period of the object. Storing the rolled sheet metal workpiece 200 at a relatively low temperature (e.g. -40°C or lower) advantageously tends to retain the sheet metal workpiece 200 in its flattened, relatively workable (i.e. softened) state, which is also known as its T4 condition. Age hardening of the sheet metal workpiece 200 tends to be substantially arrested by the low temperature storage.

Thus, a process of preparing the sheet metal workpiece 200 as performed at step s2 is provided.

Returning now to the description of step s4 of the process of Figure 4, Figure 6 is a process flow chart showing certain steps of a process of producing an initial component from the prepared sheet metal workpiece 200.

Initially, the prepared sheet metal workpiece 200 is being stored by the storage module 102 at a relatively low temperature, preferably at -40°C or less.

In this embodiment, steps s22 to s26 of the process of Figure 6 are performed in an environment that has an ambient temperature of typically between 10°C and 30°C. Preferably, steps s22 to s26 are all performed within a predetermined time period so as to ensure that the sheet metal workpiece 200 does not significantly heat up and harden, thereby becoming undesirably brittle.

In this embodiment, steps s22 to s26 are all performed while the material remains in its workable (T4) condition. Age hardening of the sheet metal workpiece 200 tends to start at the moment the workpiece 200 is subjected to temperatures above -40°C. The rate of age hardening tends to be proportional to the temperature of the working environment.

In this embodiment, once the working life of the workpiece 200 has been used, no further shaping processes are permitted to be performed on the workpiece 200. In some embodiments, once the working life of the workpiece 200 has been used further solution treatment processes may be performed on the workpiece 200, to re-soften the workpiece 200 may improve its workability.

It tends to be desirable to perform steps s22 to s26 while the temperature of the prepared sheet metal workpiece 200 is relatively low as this tends to extend the working life of the workpiece 200 considerably and the prepared sheet metal workpiece 200 tends to remain in its T4 condition.

Preferably, the predetermined time period in which steps s22 to s26 are performed is less than or equal to 2 hours in total. In some embodiments, one or more of steps s22 to s26 of the process of Figure 6 are performed in a low temperature environment, e.g., at an ambient temperature of -40°C. In some embodiments, the sheet metal workpiece 200 is returned to low temperature storage between subsequent process steps, for example between steps s22 and s24 and/or between steps s24 and s26.

At step s22, the storage module 102 sends the prepared sheet metal workpiece 200 to the sheet metal punching module 108. Transportation of the prepared sheet metal workpiece 200 to the sheet metal punching module 108 may be performed automatically or by a human operator.

At steps s24, the sheet metal punching module 108 performs a metal punching process on the prepared sheet metal workpiece 200.

The punching process is described in more detail later below with reference to Figures 7 to 10.

In this embodiment, a punch press repeatedly forces a punch tool through the prepared sheet metal workpiece 200 so as to cut out the keyhole 308 shape, followed by the component 300 profile shape from the prepared sheet metal workpiece 200. The prepared sheet metal workpiece 200 being in the T4 condition tends to facilitate the punch process. For example, the likelihood of wear on the punch tool 200 tends to be reduced. In some embodiments, a keyhole-shape punch is used to form the keyhole 308. In some embodiments, a blanking process is performed to simultaneously punch a plurality of components 300 from the prepared sheet metal workpiece 200. In some embodiments, a punch is used to "score" along a line of the fold 306, thereby facilitating the subsequent folding process. After the punching process is complete, the sheet metal punching module 108 sends the sheet metal component (i.e. the unfolded or flat form of the component 300) to the sheet metal folding module 110.

In this embodiment, punching process may include punching holes of any appropriate size and shape at least partially through the prepared sheet metal workpiece 200 (e.g. fully through the workpiece 200), punching the profile of the component 300, deburring one or more edges, and/or stamping a component identifier, timestamp and/or other information onto the component 300.

At step s26, the sheet metal folding module 110 performs a metal folding process on the received sheet metal component. In this embodiment, the sheet metal component is positioned over a die block, and pressed such that the sheet metal component folds along the fold line 306, thereby moving the first portion 302 and second portion 304 to be at a predetermined angle relative to one another. Thus, the initial component is formed.

The prepared sheet metal workpiece 200 being in the T4 condition tends to facilitate the folding process, for example, the likelihood bending of a tight radii without developing surface cracks in the component 300 tends to be reduced.

At step s28, a human operator inspects the produced initial component to check that it conforms to a predetermined set of criteria. In some embodiments, the initial component is inspected automatically.

In this embodiment, at least the first component 300 produced is inspected. Batch testing of subsequently produced components 300 may be performed. Advantageously, use of CNC robots tends to provide that components 300 are produced with high accuracy and repeatability, thus reducing or eliminating a need to inspect every component 300 that is produced. Once the process has passed a strict first article verification inspection (FACI) to confirm all operational parameters have been set up correctly, inspections may be relaxed as confidence in the process is achieved and demonstrated.

At step s30, depending on an outcome of the inspection process of step s28, one or more digital models that are used to control the CNC punch machine(s) of the sheet metal punching module 108 and/or the CNC folding machine(s) of the sheet metal folding module 110 may be updated. This control loop process may be implemented to refine the production process and ensure all produced components 300 are within a desired tolerance.

At step s32, the sheet metal folding module 110 sends the initial component (that has passed the inspection of step s28) to the storage module 102.

Thus, a process of producing an initial component from the prepared sheet metal workpiece 200 as performed at step s4 is provided.

Returning now to the description of step s24 of the process of Figure 6, Figure 7 is a process flow chart showing certain steps of an embodiment of a punching process performed on the prepared sheet metal workpiece 200.

Although the process of Figure 7 describes the punching of only a single hole through the entire thickness of the prepared sheet metal workpiece 200, it will be appreciated that in practice a plurality of holes may be punched, and that one or more of the holes may be punched only partially through the thickness of the prepared sheet metal workpiece 200.

At step s100, a CNC punch press punches a hole in the prepared sheet metal workpiece 200.

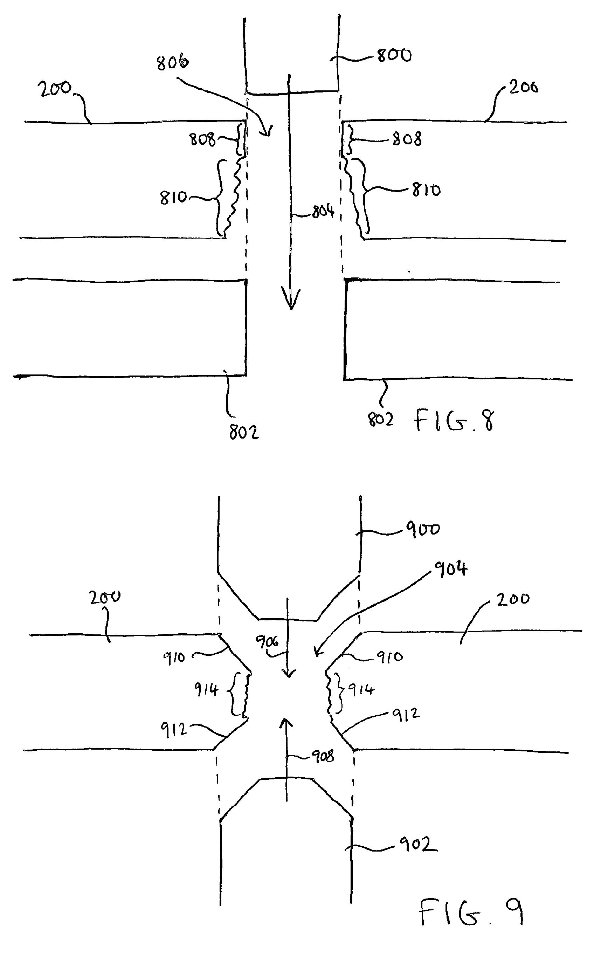

Figure 8 is a schematic illustration (not to scale) illustrating the punching operation performed at step s100. Figure 8 shows a cross section of the prepared sheet metal workpiece 200, a punch tool 800, and a punch die 802.

In this embodiment, the CNC punch press forces the punch tool 800 through the prepared sheet metal workpiece 200 and into the punch die 804. The punch tool 800 is moved through the workpiece 200 in a direction indicated in figure 8 by a solid arrow and the reference numeral 804. The punch tool 800 being forced through the sheet metal workpiece 200 creates a hole 806 in the workpiece 200 via shearing.

In this embodiment, the hole 806 comprises a first portion 808 and a second portion 810. The first portion 808 of the hole 806 has relatively smooth side walls and is formed by the punch 800 cutting or shearing the workpiece 200. The second portion 810 of the hole 806 has relatively uneven or rough side walls, and is formed by the workpiece material tearing or fracturing after having sheared the first portion 808.

In this embodiment, the first portion 808 of the hole 806 is formed by plastic deformation of the workpiece 200 by the punch 800. Also, the second portion 810 of the hole 806 is formed by fracturing of the material.

In this embodiment, the first portion 808 makes up about a third of the hole 806, and the second portion 810 makes up the remaining two thirds of the hole 806. However, in other embodiments, the first and second portions 808, 810 may make up different proportions of the hole 806. Typically, the workpiece material will fail when the punch 800 has been moved through 15% to 60% of the thickness of the workpiece material and then, because the shear stresses are greater than the shear strength of the material, the remainder of the workpiece material is torn.

In some embodiments, the diameter of the second portion 810 of the hole 806 is greater than that of the first portion 808. In some embodiments, to form a hole 806 having a desired diameter, a punch tool 800 having a diameter less than the desired diameter is used such that the second portion 810 of the hole 806 formed by that punch tool 800 tends not to exceed the desired diameter. Steps s102 and s104 may then be performed to remove additional material and produce a hole 106 having the desired diameter.

At step s102, the CNC punch press performs a coining operation on the punched hole 806 to produce a coined hole.

Figure 9 is a schematic illustration (not to scale) illustrating the coining operation performed at step s102. Figure 9 shows a cross section of the prepared sheet metal workpiece 200, a first coining tool 900, and a second coining tool 902, and the coined hole 904 formed by the coining process.

In this embodiment, the CNC punch press forces the first coining tool 900 onto a first opening of the punched hole 806. In other words, the first coining tool 900 is stamped downwards on the opening of the hole at the upper surface of the workpiece 200, as indicated in Figure 9 by the reference numeral 906. Simultaneously, the CNC punch press forces the second coining tool 902 onto a second opening of the punched hole 806, the second opening being opposite to the first opening. In other words, at the same time that the first coining tool 900 is stamped downwards onto the workpiece 200, the second coining tool 902 is stamped upwards onto the opening of the hole at the lower surface of the workpiece 200, as indicated in Figure 9 by the reference numeral 908. Alternatively, coining using the first and second coining tools 900, 902 may be performed at different times, for example, the coining by the first coining tool 900 may be performed first, and then, at a later time, the coining by the second coining tool 902 may be performed.

In some embodiment, the punched hole 806 is coined by forcing the coining tools 900, 902 along the hole 806 to a predetermined distance. In some embodiments, the punched hole 806 is coined by impacting the workpiece 200 with the coining tools 900, 902 with a predetermined force. For example, the coining tools 900, 902 may be sprung such that a predetermined load is applied to the workpiece 200.

In this embodiment, the ends of the coining tools 900, 902 that are forced into contact with the workpiece 200 are pointed such that a first chamfer 910 and a second chamfer 912 are formed at the first and second ends of the hole respectively. In particular, the first chamfer 910 is formed between the side walls of the hole and the upper surface of the workpiece 200. Also, the second chamfer 912 is formed between the side walls of the hole and the lower surface of the workpiece 200.

The coining process performed in this embodiment tends to move material from at or proximate the openings of the hole, to within the hole bore.

Coining of the workpiece 200 tends to compress a portion of the workpiece 200, in particular the portion at and proximate to the chamfers 910, 912. This tends to improve fatigue performance of the workpiece 200 in those regions.

At step s104, the CNC punch press performs a shaving operation on the chamfered hole 904 to produce a shaved hole 950. The shaving process is a finishing operation where a small amount of metal is sheared away from the already punched and coined workpiece 200.

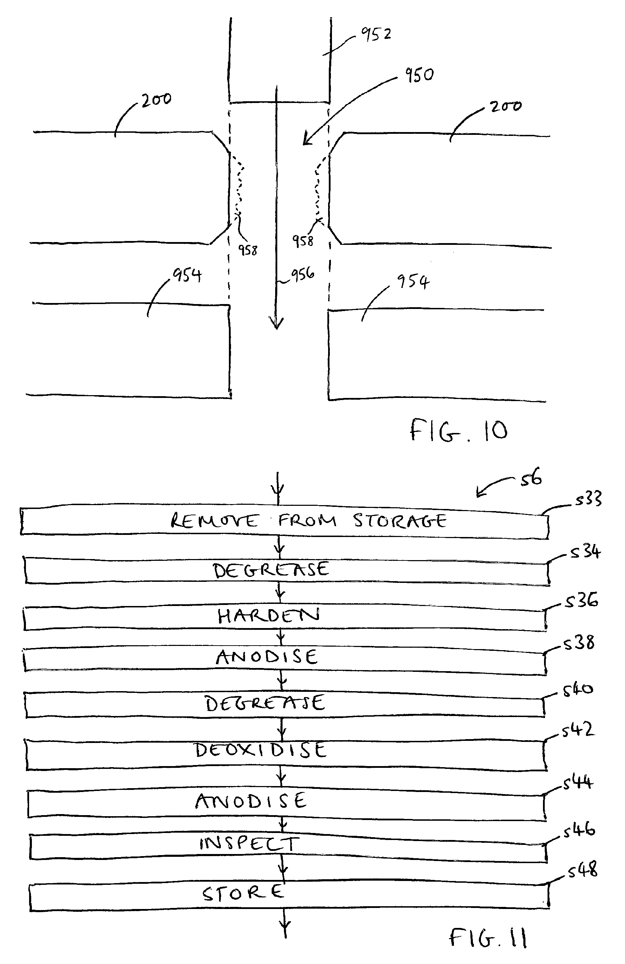

Figure 10 is a schematic illustration (not to scale) illustrating the shaving operation performed at step s104. Figure 10 shows a cross section of the prepared sheet metal workpiece 200, a shaving tool 952, and shaving die 954, and the shaved hole 950 formed by the shaving process.
In this embodiment, the CNC punch press forces the shaving tool 952 through the prepared sheet metal workpiece 200 along the axis on the chamfered hole 904 and into the shaving die 954. The shaving tool 952 is moved through the workpiece 200 in a direction indicated in figure 8 by a solid arrow and the reference numeral 956. The shaving tool 952 being forced through the chamfered hole 904 shears a small amount on material away from the workpiece 200, thereby creating the shaved hole 950. The material removed from the workpiece 200 by the shaving operation is indicated in Figure 10 by dotted lines and the reference numeral 958. In this embodiment, the shaving operation removes at least the material moved into the hole bore by the coining process. At the same time, the shaving operation removes material from the side walls of the hole so as to smooth the relatively rough surface caused by tearing or fracturing resulting from the punching process.

As only a relatively small amount of material 958 is removed by the shaving process, the shaving process tends not to cause tearing or fracturing of the workpiece. Thus, the side walls of the shaved hole 950 tend to be advantageously smooth, thereby improving the fatigue performance of the produced component 300, and decreasing the likelihood that this portion of the workpiece will act as a crack initiator in use.

The shaving process is a subtractive metal process.

Furthermore, the shaving process tends to improve dimensional accuracy. Thus, the shaved hole 950 has the desired dimensions.

In this embodiment, the shaving process is a single operation in which the shaving tool 952 is moved into and out of the hole bore once. However, in other embodiments, the shaving operation may comprise a series of shaving operations, each shaving operation progressively increasing the size of the hole until the desired size is achieved. Shaving in smaller steps in this way tends to reduce the load per shaving operation. This tends to reduce the support load (clearance requirements) on the bottom die.

It tends to desirable to for at least part of the coined edges (i.e. the chamfers 910, 912 and material proximate thereto) of the hole to remain. This tends to improve fatigue performance of the part.

After step s104, the process returns to step s26 of Figure 6.

Thus, the punching process performed on the prepared sheet metal workpiece 200 is provided.

Returning now to the description of step s6 of the process of Figure 4, Figure 11 is a process flow chart showing certain steps of a process of hardening the initial component.

At step s33, the storage module 102 sends the initial component to the metal hardening module 112. Transportation of the initial component to the metal hardening module 112 may be performed automatically or by a human operator.

At step s34, the metal hardening module 112 degreases the initial component. Degreasing of the initial component may be performed automatically or by a human operator. The initial component may be degreased according to any appropriate standard using any appropriate aerospace approved detergent.

At step s36, the metal hardening module 112 performs a precipitation hardening process on the degreased initial component. In this embodiment the EN 2395 Aluminium alloy material, the degreased initial component is heated to a predetermined temperature (for example 175°C) for a predetermined time period (for example between 9hrs and 12hrs, e.g. 10hrs). Different parameters may be used for different alloys. Precipitation hardening comprises heating the degreased initial component so as to cause one or more of its constituents to precipitate from solid solution, thereby inducing an appreciable increase in strength and/or hardness. Precipitation hardening may be performed according to any appropriate standard.

At step s38, the metal hardening module 112 anodises the hardened initial component.

At step s40, the metal hardening module 112 degreases the anodised initial component.

At step s42, the metal hardening module 112 deoxidises the degreased initial component.

At step s44, the metal hardening module 112 anodises the deoxidised initial component. Thus, the component 300 is formed.

At step s46, a human operator inspects the produced component 300 to check that it conforms to a predetermined set of criteria. In some embodiments, the component 300 is inspected automatically. If the inspection is passed, the method proceeds to step s48. However, if the inspection failed, the component 300 may be scrapped.

At step s48, the metal hardening module 112 sends to produced component 300 to the storage module 102.

Thus, a process of hardening the initial component and thereby producing the component 300 is provided.

An advantage provided by the above described system and method is that items may be produced quickly, cheaply, and with high accuracy. Use of highly accurate punching and folding robots advantageously tends to reduce or eliminate a need for inspection.

The above described system and method advantageously tends to reduce or eliminate a need for tool lugs to be formed as part of produced items. This tends to reduce wastage as more items can be produced from a given sheet metal workpiece.

The above described system and method advantageously tends to facilitate the forming of certain features of a produced item.

For example, attachment features, such as keyholes, that allow for the easy attachment of two items may be easily formed. This tends to facilitate the assembly of systems such as aircraft that include multiple component parts, as the component parts may be easily attached together. Attaching together two items using their respective attachment features may align those two items in a predetermined desired alignment. Thus, the use of assembly jigs for assembling systems of components tend to be reduced.

Other examples of easily formed features include, but are not limited to, stiffening or strengthening features such as stiffening swages (i.e. grooves or ridges). This tends to reduce or eliminate the use of separate stiffening components that tend to add weight to assembled systems of components.

The above described sheet metal punching module and the sheet metal folding module are advantageously reconfigurable.

Advantageously, a "kit of parts" for a system, for example, an aircraft sub-assembly, may be produced. Such kits may, for example, be produced and held within one or more worksheets, i.e. as parts on a sprue. The component parts may be retained on the worksheet(s) until ready for assembly, at which point they may be removed. This tends to allow for the easy painting, transportation and storage of the kit sets, and easy visual checking of the assembly build parts.

Advantageously, the above described metal hardening process may be performed on multiple items simultaneously. For example, one or more kits of parts, each formed on a single workpiece, may be hardened simultaneously. Thus, costs tend to be reduced.

Conventionally, metal objects may be produced by routing/cutting parts from a sheet and then subsequently heat treating and rolling those parts. This part-level heat treatment and rolling tends to deform the produced part leading to inaccuracies in the produced items. By solution treating and rolling/flattening at a worksheet level, prior to any of the item features being formed, introduction of these inaccuracies tends to be avoided.

For example, conventionally, rolling an object tends to slightly deform that object (e.g. by reducing the object's thickness and elongating the object). This may lead to inaccuracies within objects, especially features such as pre-drilled holes. These inaccuracies may lead the predrilled holes not being fit for purpose. For example, when two parts with predrilled holes are to be assembled together, the inaccuracies in the predrilled holes may mean that the predrilled holes do not aligned correctly when the parts are positioned as desired. Conventionally, to address this problem, holes in an object are first provided as smaller size pilot holes, that are then drilled to be full size holes during assembly. The pilot holes tends not to be useful for aligning parts that are to be assembled together. Thus, jigs are employed to hold all parts in the correct position before the pilot holes are drilled to full size. This is a very time consuming process. Assembly may be limited by the availability of assembly jigs. Also, assembly jigs tend to be expensive to produce and maintain. The above described system and method advantageously tends to overcome these issues by providing allowing for parts having accurate full size holes to be produced. In the above described method, processes that cause distortion of the worksheet tends to occur before the parts are cut from the worksheet. This is in contrast to conventional processes in which parts are cut from the worksheet and subsequently distorted. A need for assembly jigs tends to be reduced since the full size holes in the parts may be used to correctly align those parts for assembly.

Advantageously, the above described process tends to have a reduced number of process steps compared to conventional methods. Manufacturing activities are consolidated to a single machine. Also, multiple parts may be processed simultaneously.

Advantageously, the above described process may include adding identifiers, such as part/batch numbers, at the beginning of the process. This tends to reduce effort associated with sorting parts, and also the potential for errors made by incorrect identification of very similar looking parts. Thus, costs tend to be reduced.

It should be noted that certain of the process steps depicted in the flowchart of Figures 4 to 7 and 11 and described above may be omitted or such process steps may be performed in differing order to that presented above and shown in Figures 4 to 7 and 11. Furthermore, although all the process steps have, for convenience and ease of understanding, been depicted as discrete temporally-sequential steps, nevertheless some of the process steps may in fact be performed simultaneously or at least overlapping to some extent temporally.

In the above embodiments, a component part of an aircraft is produced. However, in other embodiments one or more different types of item or object is produced instead of or in addition to the aircraft component part.

In the above embodiments, the component includes a fold and a keyhole. However, in other embodiments a produced item includes one or more further folds and/or one or more further keyholes. In some embodiments, a produced item includes one or more different features instead of or in addition to the fold and/or the keyhole. Examples of other features that may be formed in an item include, but are not limited to, part marks/identifiers, holes, shaped holes, patterns, embossed areas, coined areas, stiffening features, flanges, alignment features, semi-sheared features, threaded holes, flanged lightening holes, deburred edges. In some embodiments, features such as folds and keyholes are omitted.

In the above embodiments, produced objects are formed from metal. In particular, the component is produced from EN 2396 aluminium alloy. However, in other embodiments a different material is used. For example, a different aluminium-copper alloy may be used. Also, a material such as stainless steel, or titanium sheet may be used. Also, a plastic material may be used.

In some embodiments, an aluminium-lithium alloy, such as "2198" is used. Alternative aluminium-lithium alloys include but are not limited to 2195, 2196, 2297, 2098, 2198, 2099, 2199, 2050, 2296, 2060, 2055, 2065 and 2076 series alloys. Such aluminium-lithium alloys tends to be stable and workable at room temperature compared to aerospace grade aluminium-copper alloys such as EN 2395. Thus, the above described solution treatment process, water quenching flattening operations may be omitted. Furthermore, low temperature storage of workpieces may be omitted. Hardening/strengthening process, similar to the above described precipitation hardening process, may be performed to harden/strengthen the produced items, for example, after they have been punched and folded.

In the above embodiments, a punching process is used to punch the component blank from the worksheet. However, in other embodiments a punching process is not performed. For example, in some embodiments the punching process is omitted and a component is formed by folding an unpunched/uncut workpiece. In some embodiments, a different type of cutting process, for example laser cutting, is used instead of or in addition to the punching process.

In the above embodiments, a folding process is used to fold metal items. However, in other embodiments a folding process is not performed. In some embodiments, one or more folding operations are performed by the punching machines. For example, the metal punching module may be used to fold parts.

In the above embodiments, a solution treatment process is performed to improve workability of the workpiece to facilitate the punching and folding operations. However, in other embodiments, one or more different process, such as a different type of heat treatment, may be performed to make the material and hence workpiece more workable instead of or in addition to the solution treatment process. For example, in some embodiments, a reversion heat treatment is applied to the worksheet. A reversion heat treatment typically involves rapidly heating the worksheet to a lower temperature compared to the solution treatment process. For example, a worksheet may be heated to 175°C to 185°C (e.g. 180°C) as opposed to 505°C. A reversion heat treatment typically involves heating the worksheet for a shorter duration compared to the solution treatment process. For example, a worksheet may be heated for 10mins as opposed to for 20mins. A reversion heat treatment typically involves heating up the worksheet rapidly, compared to the heating rate in a solution treatment process. For example, the worksheet may be heated from room temperature (e.g. approximately 20°C) to between 175°C and 185°C within a 2min time period. A reversion heat treatment typically involves, after heating has been applied to the worksheet, rapidly cooling the worksheet compared to the cooling rate in a solution treatment process. A water based quenching process may be used to rapidly cool the worksheet. Advantageously, metallic worksheets that undergo a reversion heat treatment tend to be workable and stable under ambient conditions, i.e. at room temperature (e.g. approximately 20°C). Thus, low temperature storage of parts tends to be avoided or reduced. This tends to be in contrast to worksheets that undergo a solution treatment heat treatment, which tends to begin to age harden at temperatures above -40°C.

## Claims

1. A method of forming a hole through a metal workpiece (200), the method comprising:
punching, using a punch tool (800), the workpiece (200) to form an initial hole through the metal workpiece (200);
coining, using a coining tool (900), the punched workpiece (200) to deform and cold-work a portion of the punched workpiece (200) at or proximate to an opening of the initial hole, thereby forming a coined hole through the metal workpiece (200); and,
shaving, using a shaving tool (952), the metal workpiece (200) to remove material from a side wall of the coined hole, thereby producing the hole through the metal workpiece (200).

2. A method according to claim 1, wherein the coining tool (900) has a pointed end such that the step of coining comprises forming, at an opening of the initial hole, a chamfer (910, 912) between a side wall of the initial hole and an external surface of the workpiece (200).

3. A method according to claim 1 or 2, wherein the step of coining comprises:
deforming a portion of the punched workpiece (200) at or proximate to a first opening of the initial hole; and
deforming a portion of the punched workpiece (200) at or proximate to a second opening of the initial hole, the second opening being opposite to the first opening.

4. A method according to claim 3 when dependent on claim 2, wherein a respective chamfer (910, 912) between the side wall of the initial hole and an external surface of the workpiece (200) is formed at each opening of the initial hole.

5. A method according to any of claims 1 to 4, wherein:
a diameter of the punch tool (800) is less than or equal to a predetermined diameter; and
a diameter of the shaving tool (952) is equal to a predetermined diameter such that the hole through the workpiece (200) has the predetermined diameter.

6. A method according to any of claims 1 to 5, wherein the punching, coining, and shaving operations are performed by a computer numerical controlled punch press.

7. A method according to any of claims 1 to 6, wherein:
the method further comprises, prior to the step of punching, performing a heat treatment process on the metal workpiece (200), and performing a rolling process on the heat treated metal workpiece (200); and
the step of punching is performed on the rolled metal workpiece (200).

8. A method according to claim 7, the method further comprising, after the step of shaving, performing a metal hardening process on the metal workpiece (200).

9. A method according to claim 7 or 8, wherein the heat treatment process is a solution treatment process.

10. A method according to any of claims 7 to 9, wherein the method further comprises, after the rolling process and prior to the step of punching, cooling the metal workpiece (200) to below a threshold temperature.

11. A method according to claim 10, wherein:
the steps of punching, coining, and shaving are performed in an environment having a temperature above the threshold temperature; and
the steps of punching, coining, and shaving are completed within a predetermined time period from a time at which the worksheet is introduced to the environment.

12. A method according to any of claims 1 to 11, wherein the metal worksheet is made of an aluminium-copper alloy.

13. A method according to any of claims 1 to 11, wherein:
the metal workpiece (200) is made of an aluminium-lithium alloy;
the method further comprises, prior to the step of punching, performing a rolling process on the metal workpiece (200); and
thereafter, performing a metal hardening process on the initial metal object so as to produce the metal object.

14. Apparatus for forming a hole through a metal workpiece (200), the apparatus comprising one or more robots configured to:
punch, using a punch tool (800), the workpiece (200) to form an initial hole through the metal workpiece (200);
coin, using a coining tool (900), the workpiece (200) to deform a portion of the punched workpiece (200) at or proximate to an opening of the initial hole, thereby forming a coined hole through the metal workpiece (200); and
shave, using a shaving tool (952), the metal workpiece (200) to remove material from a side wall of the coined hole, thereby producing the hole through the metal workpiece (200).

15. A metal object comprising a through hole, the through hole comprising a coined portion at or proximate to an opening of the through hole, and a shaved side wall, wherein the metal object has been produced using a method according to any of claim 1 to 13.
